**Europäisches Patentamt**

**European Patent Office**

**Office européen des brevets**

(19)

(11) Veröffentlichungsnummer: **0 279 270**
**B1**

(12) # EUROPÄISCHE PATENTSCHRIFT

(45) Veröffentlichungstag der Patentschrift:
09.05.90

(51) Int. Cl.⁵: **F16D 23/14**

(21) Anmeldenummer: **88101423.7**

(22) Anmeldetag: **02.02.88**

(54) Gezogene Kraftfahrzeug-Reibungskupplung.

(30) Priorität: **19.02.87 DE 3705315**

(43) Veröffentlichungstag der Anmeldung:
**24.08.88 Patentblatt 88/34**

(45) Bekanntmachung des Hinweises auf die Patenterteilung:
**09.05.90 Patentblatt 90/19**

(84) Benannte Vertragsstaaten:
**DE ES FR GB IT**

(56) Entgegenhaltungen:
**EP-A- 0 153 087**
**FR-A- 2 597 561**
**GB-A- 2 157 791**
**GB-A- 2 182 111**

(73) Patentinhaber: **INA Wälzlager Schaeffler KG,**
**Industriestrasse 1-3 Postfach 1220,**
**D-8522 Herzogenaurach(DE)**

(72) Erfinder: **Parzefall, Walter, Kettelerstrasse 1,**
**D-8526 Bubenreuth(DE)**

(74) Vertreter: **Klug, Horst, Dipl.-Ing. (FH), c/o INA Wälzlager**
**Schaeffler KG Postfach 12 20,**
**D-8522 Herzogenaurach(DE)**

**Beschreibung**

Die Erfindung betrifft eine gezogene Kraftfahrzeug-Reibungskupplung mit einem Ausrücklager, wobei ein axial verschieblicher Druckring und ein umlaufender Innenring des Ausrücklagers mittels wenigstens zweier am Umfang des Druckringes verteilter Verriegelungselemente axial zugfest miteinander verbunden sind und wobei die Verriegelungselemente, um eine Achse von einer Montagestellung in eine Verriegelungsstellung schwenkbar, am Druckring gelagert sind.

Eine derartige Kupplung ist in der EP-A 0 153 087 beschrieben. Dort sind als Verriegelungselemente Hebelemente vorgesehen, die in der Verriegelungsstellung einerseits am Druckring anliegen und andererseits in eine Ringnut des Innenrings in einer Art Sperrstellung eingeschnappt sind. Die zugfeste Verriegelung des Innenrings des Ausrücklagers erfolgt selbsttätig, indem beim Einschieben des Innenringes in den Druckring die in einem federnden Ring gelagerten Hebelelemente in die Ringnut des Innenrings einschwenken.

Bei einer solchen Ausbildung besteht die Gefahr, daß infolge schlagartiger Belastung die Hebelelemente aus ihrer Sperrstellung umklappen, was zu einem Ausfall der Kupplung führt.

Aufgabe der Erfindung ist es, eine Einrichtung der eingangs genannten Art vorzuschlagen, die die Verriegelung des Innenrings mit dem Druckring soweit verbessert, daß ein unbeabsichtiges Lösen vermieden wird.

Erfindungsgemäß wird obige Aufgabe bei einer Kupplung der eingangs genannten Art dadurch gelöst, daß die Verriegelungselemente im Querschnitt winkelförmig ausgebildet und an ihren dem Innenring zugewandten Enden als Haken ausgebildet sind, die einen am Innenring ausgebildeten Kragen hintergreifen, während ihre dem Innenring abgewandten Enden als Winkelsegment ausgebildet sind, die mit ihren Flächen an der dem Haken abgewandten Seite des Druckrings sowie an dessen Außenumfang anliegen.

Durch die Lagerung der Verriegelungselemente am Druckring ist gewährleistet, daß diese mit dem Druckring auf konstrutiv einfache Weise fest verbunden sind. Die Schwenkbarkeit in Verbindung mit der Verhakung stellt einerseits eine konstruktiv einfache Montagemöglichkeit zwischen dem Druckring und dem Innenring dar. Andererseits erlaubt sie eine sichere Verriegelung. Darüber erübrigt sich ein enge Tolerierung der Einbaulage des Innenrings gegenüber dem Druckring. Es ist dadurch gewährleistet, daß bei der Montage des Ausrücklagers auch bei größeren Toleranzen die nötige zugfeste Verbindung zwischen dem Innenring und dem Druckring entsteht. Es besteht nicht die Gefahr, daß nach der Montage der Innenring so im Druckring sitzt, daß die Verriegelungselemente in einer Demontagestellung stehen oder beim Entkuppeln in die Demontagestellung bewegt werden.

Besonders vorteilhaft wirkt es sich aus, daß die Montage des Innenrings am Druckring unabhängig von der jeweiligen Drehstellung des Innenrings gegenüber den Verriegelungselementen möglich ist.

Es können jedoch auch an den Verriegelungselementen oder dem Innenring Öffnungen vorgesehen sein, in die dann am Umfang des Innenrings bzw. der Verriegelungselemente angeordnete Nasen greifen. Dann müßte allerdings bei der Montage ein Ausrichten der Öffnungen und der Nasen erfolgen.

In bevorzugter Weiterbildung der Erfindung weisen die Verriegelungselemente und/oder der Innenring eine äußere Schräge auf, so daß beim axialen Zusammenschieben die Verriegelungselemente verschwenken und über den Innenring gleiten. Dadurch ist gewährleistet, daß bei der Montage das Verhaken erleichtert ist.

Um bei der Montage ein selbständiges Verhaken zu erreichen, können die Verriegelungselemente mittels Federn vorgespannt sein; oder es können an den Verriegelungselementen Schenkel ausgebildet sein, an denen bei der Montage ein Fortsatz des Ausrücklagers anschlägt, so daß die Verriegelungselemente in die Verhakungsstellung gebracht werden.

In Ausgestaltung der Erfindung erstrecken sich die Verriegelungselemente als Segmente gemeinsam im wesentlichen über den gesamten Umfang des Innenrings. Dadurch können auf einfache Weise auch große Ausrückkräfte von dem Innenring über die Verriegelungselemente auf den Druckring übertragen werden.

Weitere vorteilhafte Ausgestaltungen der Erfindung ergeben sich aus Unteransprüchen und der folgenden Beschreibung von Ausführungsbeispielen. In der Zeichnung zeigen:

Figur 1 eine Fahrzeugkupplung im Bereich des Ausrücklagers,

Figur 2 eine gegenüber Fig. 1 vergrößerte Teilansicht,

Figur 3 eine Ansicht längs der Linie III-III nach Fig. 2,

Figur 4 eine Ansicht längs der Linie IV-IV nach Fig. 2,

Figur 5 eine Teilansicht entsprechend Fig. 2 in nicht verhakter Stellung,

Figur 6 ein weiteres Ausführungsbeispiel der Erfindung und

Figur 7 eine Ansicht längs der Linie VII-VII nach Fig. 6.

In einer Kupplungsglocke (1) ist ein Führungsrohr (2) für eine nicht näher dargestellte Getriebe-Antriebswelle angeordnet. Auf dem Führungsrohr (2) sitzt verschieblich ein Ausrücklager (3). An diesem greift ein Kupplungshebel (4) an. Das eine freie Ende des Kupplungshebels (4) ist an einem Abstützbolzen (5) schwenkbar gelagert. Am anderen freien Ende (6) greift ein nicht näher dargestelltes mechanisches oder hydraulisches Betätigungsglied an. Es handelt sich hier um eine gezogene Kupplung.

Die nicht näher dargestellten Kupplungsscheiben sind im Bereich (7) der Kupplungsglocke (1) angeordnet. An der einen Kupplungsscheibe liegt eine Kupplungs-Tellerfeder (8) an.

Am Innenumfang der Tellerfeder (8) ist ein Druckring (9) festgelegt, der aus einem polymeren Kunststoff hergestellt ist. Der Druckring (9) weist eine konkave Anlagefläche (10) auf, an der der Innenumfang der Tellerfeder (8) mit einer entsprechenden Wölbung (11) anliegt. Die Anlagefläche (10) könnte bei entsprechender Gestalt der Wölbung (11) auch konvex ausgebildet sein. Eine weitere Tellerfeder (12), die sich über ein Verschlußteil (13) am Druckring (9) abstützt und an der Tellerfeder (8) anliegt, hält den Druckring (9) an der Tellerfeder (8). Das Verschlußteil (13) ist im Querschnitt Z-förmig gestaltet und bajonettverschlußartig am Druckring (9) festgelegt. Durch wenigstens einen Mitnehmer (14) ist der Druckring (9) verdrehsicher an der Tellerfeder (8) festgelegt. Dies ist jedoch nicht notwendig.

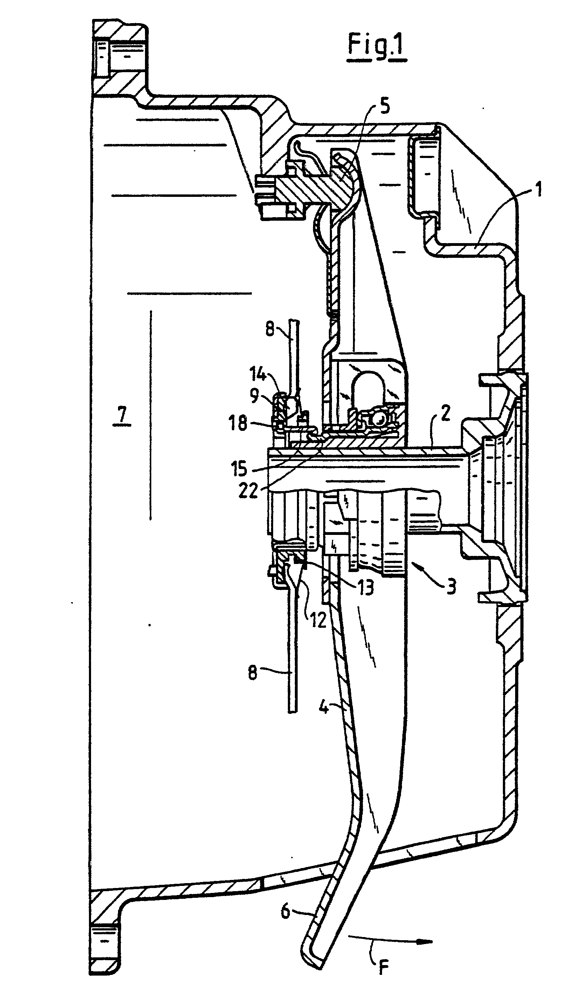

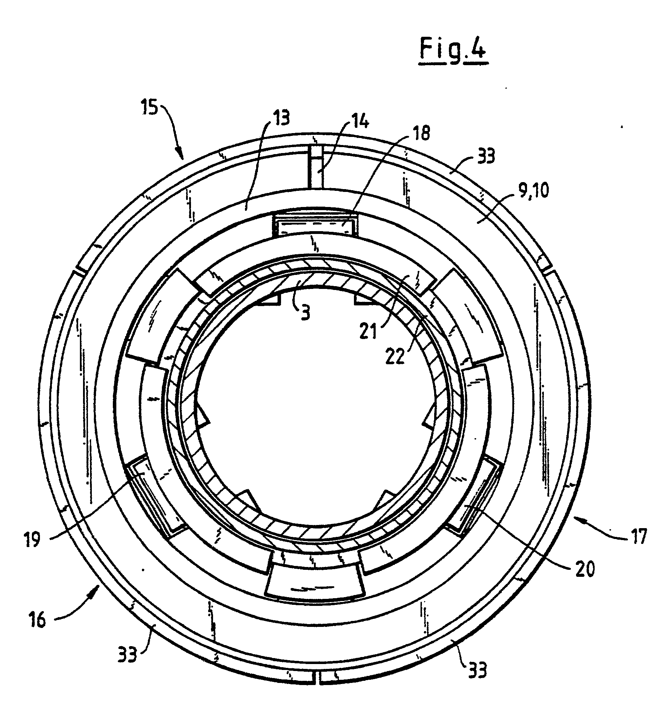

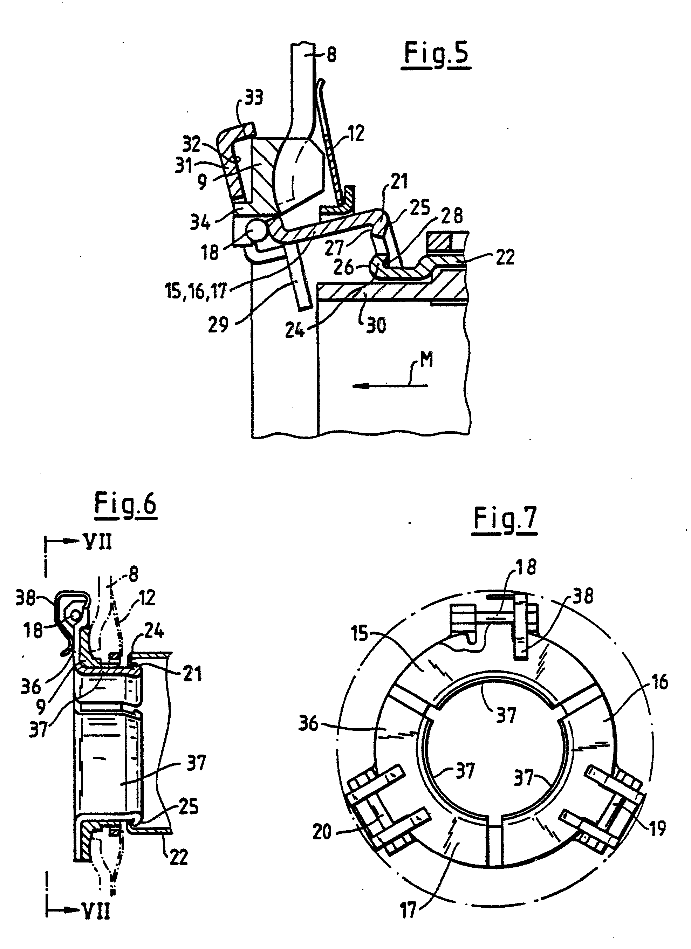

Am Druckring (9) sind über den Umfang verteilt drei Verriegelungselemente (15, 16, 17) um Achsen (18, 19, 20) schwenkbar gelagert. Die Achsen (18, 19, 20) sind beim Ausführungsbeispiel nach den Figuren 1 bis 5 am inneren Umfang des Druckrings (9) und beim Ausführungsbeispiel nach Figur 6 und 7 an dessen Außenumfang angeordnet.

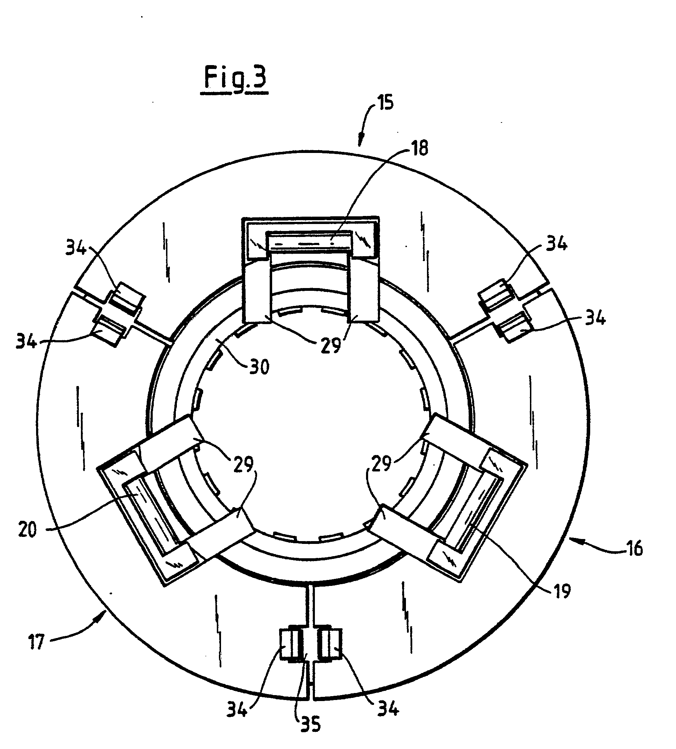

Die Verriegelungselemente (15, 16, 17) sind als Kreissegmente ausgebildet, wobei sie sich gemeinsam im wesentlichen über den gesamten Umfang eines Innenringes (22) erstrecken (vgl. Figur 3, 4, 7).

An dem einen Rand sind die Verriegelungselemente (15, 16, 17) zu Haken (21) geformt. Das Ausrücklager (3) weist den Innenring (22) auf, der im Ausrücklager (3) über ein Kugellager (23) gelagert ist. Der Innenring (22) läuft damit mit der Tellerfeder (8), dem Druckring (9) und den Verriegelungselementen (15, 16, 17) um. Der Innenring (22) ist an seinem Ende außerhalb des Ausrücklagers (3) mit einem Kragen (24) versehen, der von den Haken (21) hintergriffen ist.

Die Funktionsweise ist dabei folgende:

Wird - zum Entkuppeln - der Kupplungshebel (4) in Richtung des Pfeiles (F) geschwenkt, dann nimmt er das Ausrücklager (3) mit dem Innenring (22) mit. Über die Verhakung zieht der Innenring (22) die Verriegelungselemente (15, 16, 17) und damit den Druckring (9) mit, der seinerseits die Tellerfeder (8) mitnimmt, wodurch die Kupplungsscheiben voneinander freiwerden.

Beim Ausführungsbeispiel nach den Figuren 1 bis 5 umschließen die Verriegelungselemente (15, 16, 17) den Innenring (22) außen. Die Haken (21) und der Kragen (24) weisen äußere Schrägen (25 bzw. 26) auf. Außerdem sind die Haken (21) und der Kragen (24) mit inneren Schrägen (27 bzw. 28) versehen. Infolge der äußeren Schrägen (25, 26) kann sich bei der Montage der Innenring (22) unter die Verriegelungselemente (15, 16, 17) schieben. Die inneren Schrägen (27, 28) stellen sicher, daß auch bei auf die Verriegelungselemente (15, 16, 17) wirkenden Fliehkräften die Verhakung erhalten bleibt.

An den Verriegelungselementen (15, 16, 17) sind Schenkel (29) angeordnet. Diese ragen vor einen axialen Fortsatz (30) des Ausrücklagers (3).

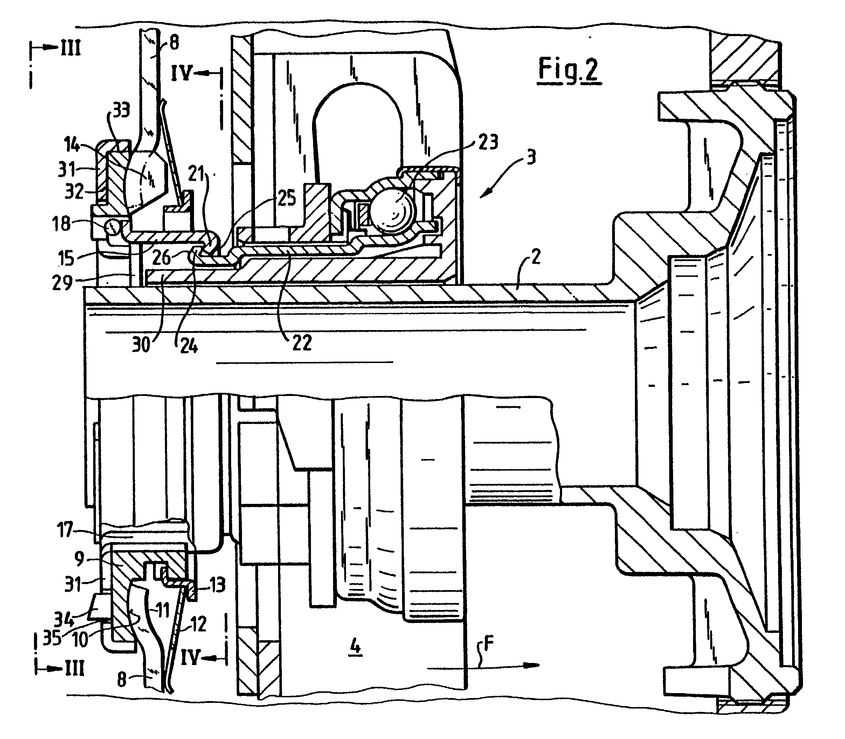

An dem Verriegelungselement (15, 16, 17) ist ein Winkelsegment (31) ausgebildet. In verhakter Stellung des Verriegelungselements (15, 16, 17) (vgl. Figur 2) liegt dessen eine Fläche (32) an der dem Ausrücklager (3) abgewandten Seite des Druckrings (9) an. Dadurch ist der Druckring (9) beim Entkuppeln zusätzlich gestützt, so daß die Kupplungs- Betätigungskraft nicht allein über die Achsen (18, 19, 20) übertragen werden muß. Die andere Fläche (33) des Winkelsegments (31) liegt am Außenumfang des Druckrings (9).

An dem Druckring (9) sind Haltenasen (34) für die Winkelsegmente (31) in verhakter Stellung vorgesehen, die in Ausschnitte (35) der Winkelsegmente (31) greifen. Die Haltenasen (34) bilden eine zusätzliche Sicherung gegen ein Verschwenken der Verriegelungselemente (15, 16, 17) beim Auftreten von Fliehkräften. Sie sind federelastisch und halten die Verriegelungselemente (15, 16, 17) in der offenen Stellung bis der Fortsatz (30) auf die Schenkel (29) trifft.

Die Montage geschieht etwa folgendermaßen:

Wird ausgehend von der in Figur 5 dargestellten Stellung, in der die Verriegelungselemente (15, 16, 17) von dem Innenring (22) weggeschwenkt sind, das Ausrücklager (3) weiter in Richtung des Pfeiles (M) zum Druckring (9) geschoben, dann stößt der Fortsatz (30) auf die Schenkel (29). Dadurch schwenken die Verriegelungselemente (15, 16, 17) um ihre Achse (18, 19, 20). Die Haken (21) hintergreifen den Kragen (24). Das Winkelsegment (31) liegt am Druckring (9) an. Dadurch ist die zugfeste Verbindung zwischen dem Druckring (9) und dem Innenring (22) hergestellt. Es erfolgt in jedem Falle, selbst bei größeren Toleranzen, ein sicheres Verhaken der Verriegelungselemente (15, 16, 17) mit dem Kragen (24) (vgl. Figur 2).

Beim Ausführungsbeispiel nach Figur 6 liegen die Achsen (18, 19, 20) am Außenumfang des Druckrings (9). Ein Winkelschenkel (36) des Verriegelungselements (15, 16, 17) liegt an der dem Innenring (22) abgewandten Seite des Druckrings (9) - ähnlich wie die Fläche (32) -. Ein zweiter Winkelschenkel (37) des Verriegelungselements (15, 16, 17) erstreckt sich durch den Innenumfang des Druckrings (9) hindurch. An seinem Ende ist der Haken (21) ausgebildet. Die Haken (21) liegen hier innerhalb des Innenrings (22). Dementsprechend ragt dessen Kragen (24) nach innen.

Hierbei wirken im Betrieb auftretende Fliehkräfte nicht so, daß sie die Tendenz haben, die Verriegelungselemente (15, 16, 17) von dem Innenring (22) wegzuschwenken.

Auf den Winkelschenkel (36) drückt eine Bügelfeder (38).

Bei der Montage wird der Innenring (22) über die äußere Schräge (25) der Haken (21) geschoben, wodurch die Verriegelungselemente (15, 16, 17) geringfügig gegen die Kraft der Bügelfeder (38) verschwenken, bis die Haken (21) hinter den Kragen (24) rasten. Die Bügelfeder (38) drückt die Verriegelungselemente (15, 16, 17) in ihre verhakte Stellung. Bei der Montage ist also kein Werkzeug notwendig.

Auch beim Ausführungsbeispiel nach Figur 6 und 7 wird die beim Entkuppeln auftretende Betätigungskraft nicht über die Achsen (18, 19, 20) auf den Druckring (9) übertragen. Die Kraftübertragung erfolgt über die an dem Druckring (9) anliegenden Winkelschenkel (36).

Im Rahmen der Erfindung liegen zahlreiche weitere Ausführungsbeispiele. So ist es beispielsweise möglich, beim Ausführungsbeispiel nach den Figuren 1 bis 5 anstelle der Schenkel (29) und des Fortsatzes (30) Federn vorzusehen, um die Verriegelungselemente (15, 16, 17) in ihre verhakte Stellung zu bringen.

## Patentansprüche

1. Gezogene Kraftfahrzeugkupplung mit einem Ausrücklager (3), wobei ein axial verschieblicher Druckring (9) und ein umlaufender Innenring (22) des Ausrücklagers mittels wenigstens zweier am Umfang des Druckringes verteilter Verriegelungselemente (15, 16, 17) axial zugfest miteinander verbunden sind, wobei die Verriegelungselemente, um eine Achse von einer Montagestellung in eine Verriegelungsstellung schwenkbar, am Druckring (9) gelagert sind, dadurch gekennzeichnet, daß die Verriegelungselemente (15, 16, 17) im Querschnitt winkelförmig ausgebildet und an ihren dem Innenring (22) zugewandten Enden als Haken (21) ausgebildet sind, die einen am Innenring (22) ausgebildeten Kragen (24) hintergreifen, während ihre dem Innenring (22) abgewandten Enden als Winkelsegmente (31) ausgebildet sind, die mit ihren Flächen (32, 33) an der dem Haken (21) abgewandten Seite des Druckringes (9) sowie an dessen Außenumfang anliegen.

2. Kupplung nach Anspruch 1, dadurch gekennzeichnet, daß an den Verriegelungselementen (15, 16, 17) Schenkel (29) ausgebildet sind, an die ein Fortsatz (30) des Ausrücklagers (3) bei seiner axialen Verschiebung anstößt.

3. Kupplung nach Anspruch 1 oder 2, dadurch gekennzeichnet, daß die Verriegelungselemente (15, 16, 17) und/oder der Innenring (22) eine äußere Schräge (25, 26) aufweisen, so daß beim axialen Zusammenschieben die Verriegelungselemente (15, 16, 17) verschwenken und über den Innenring (22) gleiten.

4. Kupplung nach einem der vorhergehenden Ansprüche, dadurch gekennzeichnet, daß die Haken (21) und der Kragen (24) innere Schrägen (27, 28) aufweisen, so daß bei auf die Verriegelungselemente (15, 16, 17) wirkender Fliehkraft die Haken (21) von dem Kragen (24) gehalten sind.

5. Kupplung nach einem der vorhergehenden Ansprüche, dadurch gekennzeichnet, daß die Verriegelungselemente (15, 16, 17) als Segmente sich gemeinsam im wesentlichen über den gesamten Umfang des Innenringes (22) erstrecken.

6. Kupplung nach einem der vorhergehenden Ansprüche, dadurch gekennzeichnet, daß die Verriegelungselemente (15, 16, 17) am inneren Umfang des Druckringes (9) schwenkbar gelagert sind.

7. Kupplung nach Anspruch 6, dadurch gekennzeichnet, daß die Verriegelungselemente (15, 16, 17) im Bereich der Haken (21) den Innenring (22) außen umgreifen.

8. Kupplung nach Anspruch 6 und 7, dadurch gekennzeichnet, daß am Druckring (9) Haltenasen (34) für die Verriegelungselemente (15, 16, 17) ausgebildet sind.

9. Kupplung nach Anspruch 1 bis 5, dadurch gekennzeichnet, daß die Verriegelungselemente (15, 16, 17) außen am Umfang des Druckrings (9) schwenkbar gelagert sind.

10. Kupplung nach Anspruch 9, dadurch gekennzeichnet, daß die Verriegelungselemente (15, 16, 17) im Bereich der Haken (21) innerhalb des Innenrings (22) liegen.

11. Kupplung nach einem der vorhergehenden Ansprüche, dadurch gekennzeichnet, daß an dem Verriegelungselement (15, 16, 17) ein Feder (38) anliegt, die dieses in seine verhakte Stellung drückt.

## Claims

1. Pulled-type friction clutch for a automotive vehicle, which friction clutch has a release bearing (3) in which an axially displaceable thrust collar (9) and a rotating inner ring (22) of the release bearing are connected with each other in an axial tension-tightening joint by means of at least two locking elements (15, 16, 17) spaced at the periphery of the trust collar, the locking elements being mounted on the thrust collar (9) in such a way that they can pivot about an axis from an assembly position into a locking position, characterized in that the locking elements (15, 16, 17) have an angular cross-section and at their ends facing the inner ring (22) are shaped as hooks (21) which engage behind a collar (24) formed on the inner ring (22), whereas their ends away from the inner ring (22) are shaped as angular segments (31) which bear with their surfaces (32, 33) against the side of the thrust collar (9) away from the hook (21) as well as against its outer periphery.

2. Clutch according to claim 1, characterized in that on the locking elements (15, 16, 17), arms (29) are formed, on which an extension (30) of the release bearing (3) strikes when this is axially displaced.

3. Clutch according to claim 1 or 2, characterized in that the locking elements (15, 16, 17) and/or the inner ring (22) have an outer bevel (25, 26) so that, on axial pushing together, the locking elements (15, 16, 17) pivot and slide over the inner ring (22).

4. Clutch according to one of the preceding claims, characterized in that the hooks (21) and the collar (24) have inner bevels (27, 28) so that, when a centrifugal force acts on the locking elements (15, 16, 17), the hooks (21) are retained by the collar (24).

5. Clutch according to one of the preceding claims, characterized in that the locking elements (15, 16, 17) extend as segments, together essentially over the entire periphery of the inner ring (22).

6. Clutch according to one of the preceding claims, characterized in that the locking elements (15, 16, 17) are pivotally mounted at the inner periphery of the thrust collar (9).

7. Clutch according to claim 6, characterized in that in the region of the hooks (21) the locking elements (15, 16, 17) engage around the inner ring (22).

8. Clutch according to claim 6 and 7, characterized in that retaining lugs (34) for the locking elements (15, 16, 17) are formed on the thrust collar (9).

9. Clutch according to claim 1 to 5, characterized in that the locking elements (15, 16, 17) are pivotally mounted at the outer periphery of the thrust collar (9).

10. Clutch according to claim 9, characterized in that in the region of the hooks (21) the locking elements (15, 16, 17) are situated within the inner ring (22).

11. Clutch according to one of the preceding claims, characterized in that a spring (3) bears against the locking element (15, 16, 17) and presses it into its hooked position.

**Revendications**

1. Embrayage à commande tirée pour véhicule automobile avec une butée de débrayage (3) dans laquelle une bague de poussée (9) axialement coulissante et une bague interne (22) rotative sont raccordées axialement l'une avec l'autre à l'aide d'au moins deux éléments de verrouillage (15, 16, 17) répartis sur la périphérie de la bague de poussée en formant un joint axial autoserrant en traction, les éléments de verrouillage étant montés pivotants autour d'un axe sur la bague de poussée (9) et pouvant pivoter d'une position de montage dans une position de verrouillage, caractérisé en ce que les éléments de verrouillage (15, 16, 17) ont une section transversale angulaire et qu'à leurs extrémités faisant face à la bague interne (22), ils sont formés en crochets (21) qui s'engagent derrière un collet (24) formé sur la bague interne (22) tandis que leurs extrémités opposées à la bague interne (22) sont en forme de segments angulaires (31) qui s'appuient avec leurs surfaces (32, 33) contre le côté de la bague de poussée (9) opposé au crochet (21) ainsi que contre sa périphérie extérieure.

2. Embrayage selon la revendications 1, caractérisé en ce que sur les éléments de verrouillage (15, 16, 17) sont formés des bras (29) contre lesquel bute un prolongement (30) de la butée de débrayage (3) quand celle-ci est axialement déplacée.

3. Embrayage selon la revendications 1 ou 2, caractérisé en ce que sur les éléments de verrouillage (15, 16, 17) et/ou la bague interne (22) présentent un chanfrein extérieur (25, 26) de sorte que, lors d'un montage axial, les éléments de verrouillage (15, 16, 17) pivotent et glissent par-dessus la bague interne (22).

4. Embrayage selon une des revendications précédentes, caractérisé en ce que les crochets (21) et le collet (24) présentent des chanfreins intérieurs (27, 28) de sorte que, quand une force centrifuge agit sur les éléments de verrouillage (15, 16, 17), les crochets (21) sont retenus par le collet (24).

5. Embrayage selon une des revendications précédentes, caractérisé en ce que sur les éléments de verrouillage (15, 16, 17) s'étendent en forme de segments, ensemble, essentiellement sur la périphérie entière de la bague interne (22).

6. Embrayage selon une des revendications précédentes, caractérisé en ce que sur les éléments de verrouillage (15, 16, 17) sont montés pivotants sur la périphérie intérieure de la bague de poussée (9).

7. Embrayage selon la revendications 6, caractérisé en ce que, dans la région des crochets (21), les éléments de verrouillage (15, 16, 17) s'engagent autour de la bague interne (22).

8. Embrayage selon les revendications 6 et 7, caractérisé en ce que, sur la bague de poussée (9), sont formés des talons de retenue (34) pour les éléments de verrouillage (15, 16, 17).

9. Embrayage selon les revendications 1 à 5, caractérisé en ce que sur les éléments de verrouillage (15, 16, 17) sont montés pivotants sur la périphérie extérieure de la bague de poussée (9).

10. Embrayage selon la revendication 9, caractérisé en ce que, dans la région des crochets (21), les éléments de verrouillage (15, 16, 17) sont situés à l'intérieur de la bague interne (22).

11. Embrayage selon une des revendications précédentes, caractérisé en ce qu'un ressort (38) s'appuie contre l'élément de verrouillage (15, 16, 17) et le pousse dans sa position accrochée.

Fig.1

Fig.2

## Fig.3

EP 0 279 270 B1

Fig.4

## Fig.5

## Fig.6

## Fig.7